Europäisches Patentamt

European Patent Office

Office européen des brevets

(19)

(11) Numéro de publication : **0 005 740**
**B1**

# (12) FASCICULE DE BREVET EUROPÉEN

(45) Date de publication du fascicule du brevet :
15.12.82

(21) Numéro de dépôt : 79101345.1

(22) Date de dépôt : 03.05.79

(51) Int. Cl.³ : **B 65 B 35/04, B 65 G 47/51**

(54) **Ligne d'emballage automatique.**

(30) Priorité : 05.06.78 CH 6153/78

(43) Date de publication de la demande :
12.12.79 (Bulletin 79/25)

(45) Mention de la délivrance du brevet :
15.12.82 Bulletin 82/50

(84) Etats contractants désignés :
BE DE FR GB IT SE

(56) Documents cités :
CH A 512 942
FR A 2 294 943
FR E 87 688
US A 1 921 577

(73) Titulaire : SAPAL, Société Anonyme des Plieuses
Automatiques
44, Av. du Tir Fédéral
CH-1024 Ecublens (CH)

(72) Inventeur : Kramer, Ulrich
Tour Haldimand 1
CH-1009 Pully (CH)
Inventeur : Chenevard, Alexis
Résidence de la Côte 20
CH-1110 Morges (CH)

(74) Mandataire : Nithardt, Roland
CABINET ROLAND NITHARDT Rue Edouard Verdan
15
CH-1400 Yverdon (CH)

## Ligne d'emballage automatique

La présente invention concerne une ligne d'emballage automatique comportant des bandes transporteuses d'alimentation agencées pour amener des produits à emballer, disposés en rangées et ne se touchant pas les uns les autres, vers une série de machines à emballer, et des stations d'alimentation automatique disposées le long desdites bandes pour distribuer sélectivement lesdits produits aux machines à emballer, cette ligne étant équipée d'un dispositif de récupération monté après la dernière station d'alimentation automatique pour recueillir les produits n'ayant pas été pris en charge par lesdites stations, d'un dispositif de stockage pour emmagasiner momentanément les produits recueillis par le dispositif de récupération, d'un dispositif d'éjection qui évacue les produits disposés de façon non conforme pour être réinjectés sur la ligne et/ou en cas de saturation du dispositif de stockage, et d'un dispositif de recyclage automatique des produits emmagasinés par le dispositif de stockage, le dispositif de récupération, le dispositif de stockage et le dispositif de recyclage comportant des bandes transporteuses sans fin disposées au moins momentanément à la suite les unes des autres, des mécanismes d'entraînement indépendants et des détecteurs agencés pour commander la mise en marche et l'arrêt desdits mécanismes, dans lequel le dispositif de recyclage est agencé pour réinjecter les produits recueillis par le dispositif de récupération puis emmagasinés par le dispositif de stockage sur les bandes des transporteuses d'alimentation, après au moins la première station d'alimentation automatique et avant au moins la dernière station d'alimentation automatique de la ligne.

On connaît déjà des lignes d'emballage de ce type, notamment décrites dans le brevet américain US-A-1 921 577 et le brevet suisse CH-A-512 942. Dans le premier document cité, les produits, constitués par exemple par des boîtes cylindriques, sont recyclés sur la ligne avant la première station d'alimentation automatique, lors d'un arrêt de la machine de production alimentant la ligne.

Le dispositif décrit dans le second document permet de déposer des produits à recycler dans les vides créés par les prélèvements opérés pour fournir des produits à une première station d'alimentation automatique.

Toutefois, dans les lignes d'emballage automatique connues, en particulier celles destinées aux produits alimentaires tels que tablettes ou bâtons de chocolat moulés, fourrés ou enrobés, les produits provenant d'une machine de production, habituellement une mouleuse ou une enrobeuse, alimentent une série de machines à emballer. Ces produits sont transportés par des bandes transporteuses sans fin de la machine de production vers les machines à emballer. Le prélèvement séquentiel d'une partie des produits transportés par les bandes sans fin, se fait par des stations d'alimentation automatiques dont chacune dirige les produits qu'elle prélève en direction de l'emballeuse qui lui est associée. La capacité de la machine de production est généralement égale ou légèrement inférieure à la somme des capacités des machines à emballer d'une même ligne. De ce fait lorsqu'une station d'alimentation automatique où la machine à emballer qui lui est associée, tombe en panne, une partie des produits fabriqués ne peut plus être prise en charge par les emballeuses restantes et par suite doivent être évacuées en bout de ligne. Lorsqu'il s'agit de produits moulés, ils peuvent être récupérés dans des paniers et recyclés en vue d'un nouveau moulage. Par contre lorsqu'ils comprennent des produits enrobés, on conçoit aisément qu'un nouveau moulage n'est plus guère possible, les produits en surplus constituent alors un déchet non récupérable ou éventuellement une matière première pour la confection de sous-produits.

Pour pallier ces inconvénients, on a développé des lignes telles que définies ci-dessus, comportant un moyen de stockage momentané de rangées de plaques de chocolat, disposées sur des plateaux qui sont ensuite entassés les uns sur les autres et réintroduits manuellement dans la ligne, lorsque tous les éléments constituants cette ligne ont repris leur rythme de travail normal. Un tel dispositif de stockage est par exemple décrit dans le brevet suisse CH-A-426 638.

Ce dispositif, bien qu'il permette de réduire le déchet dans la fabrication de produits enrobés, présente cependant des inconvénients majeurs. En effet, le stockage nécessite des plateaux qui sont ensuite entassés les uns sur les autres. En raison du poids des plateaux et des produits, un tel entassement peut provoquer l'écrasement ou du moins un endommagement partiel des produits stockés. D'autre part, le recyclage des produits stockés nécessite une intervention manuelle.

La présente invention se propose d'éliminer la plupart des défauts des techniques connues. Dans ce but, elle est caractérisée en ce que le dispositif de récupération comporte deux bandes transporteuses parallèles et superposées, montées sur un support, cet ensemble étant pivotable autour d'un axe disposé à l'intersection des diagonales du quadrilatère défini par les quatre extrémités desdites bandes, chacune de ces bandes étant équipée d'un mécanisme agencé de manière à l'animer alternativement d'un mouvement continu et d'un mouvement intermittent.

La présente invention sera mieux comprise en référence à la description d'un exemple de réalisation et du dessin annexé dans lequel :

la figure 1 représente schématiquement une vue de face d'une ligne d'emballage automatique selon l'invention,

la figure 2 est une vue de détail du dispositif de récupération de la ligne de la figure 1,

la figure 3 est une vue de détail illustrant une partie du dispositif de stockage de la ligne d'emballage de la figure 1,

la figure 4 est une vue de détail illustrant une autre partie du dispositif de stockage ainsi que le dispositif d'éjection de la ligne de la figure 1,

la figure 5 représente plus en détails le dispositif de recyclage de la ligne de la figure 1,

la figure 6 est une vue agrandie du dispositif de décharge faisant partie du dispositif de recyclage illustré par la figure 5, et,

la figure 7 est un schéma séquentiel illustrant les différentes étapes du fonctionnement des éléments permettant la récupération et le recyclage automatiques des produits en bout de ligne, et,

la figure 8 est une vue schématique des connexions électriques entre les différents organes de détection et les commandes des éléments mobiles de la ligne.

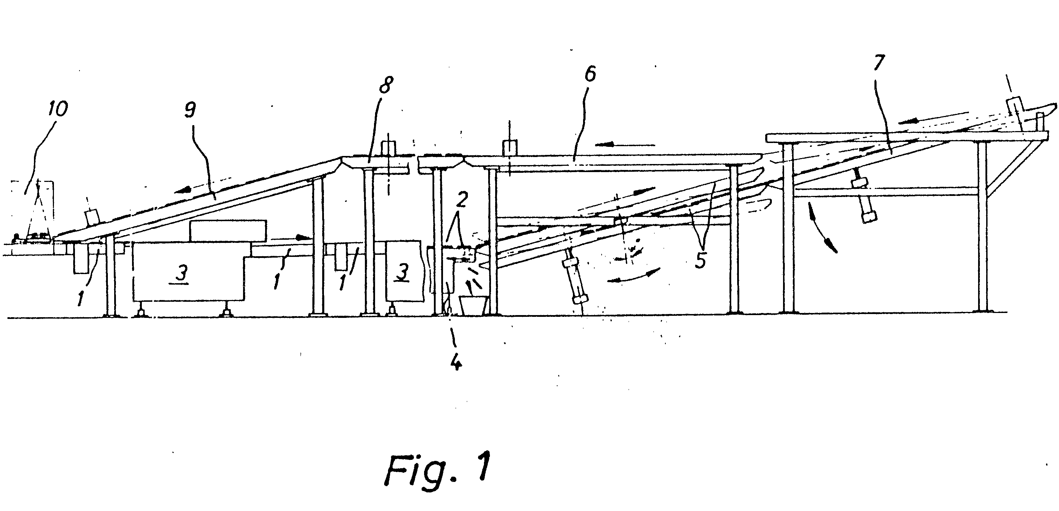

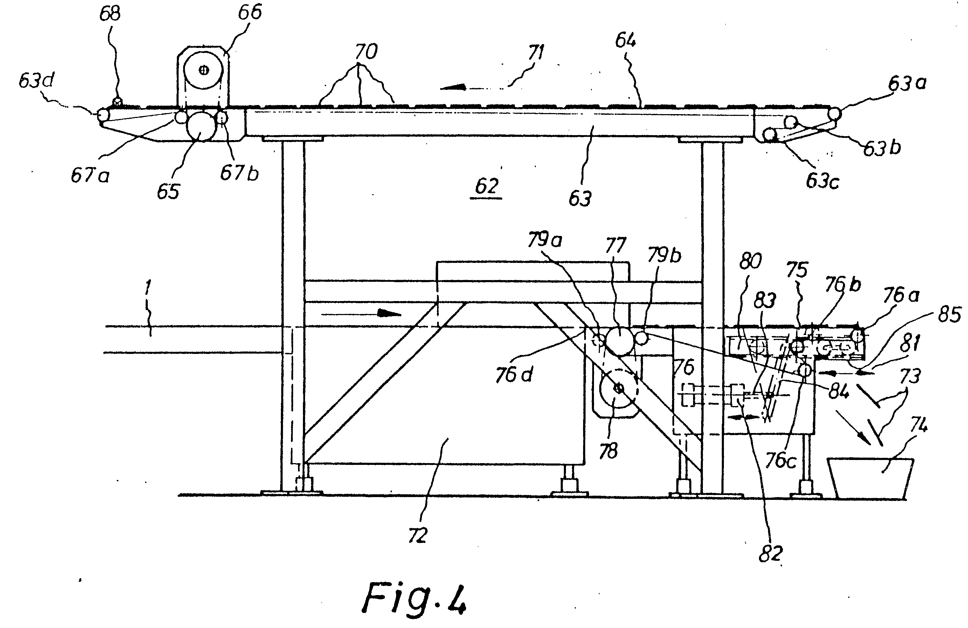

En référence à la figure 1, la ligne d'emballage automatique décrite comporte des bandes transporteuses 1 sans fin représentées schématiquement, qui portent par exemple des tablettes de chocolat 2 provenant d'une machine de production (non représentée) pouvant être une mouleuse ou une enrobeuse de produits fourrés. Ces bandes sont interrompues par des stations d'alimentation automatique 3 qui prélèvent séquentiellement des produits transportés par les bandes 1 pour les amener directement sur une machine à emballer (non représentée). Après la dernière station d'alimentation automatique, on a prévu un dispositif d'éjection 4 (illustré plus en détail en référence à la figure 4), qui dans les lignes conventionnelles recueille tous les produits qui ne sont pas pris en charge par les stations d'alimentation automatiques et subséquemment par les machines à emballer correspondantes, mais qui dans la ligne décrite n'intervient qu'au cas où le dispositif de stockage est saturé, comme cela sera décrit ci-dessous.

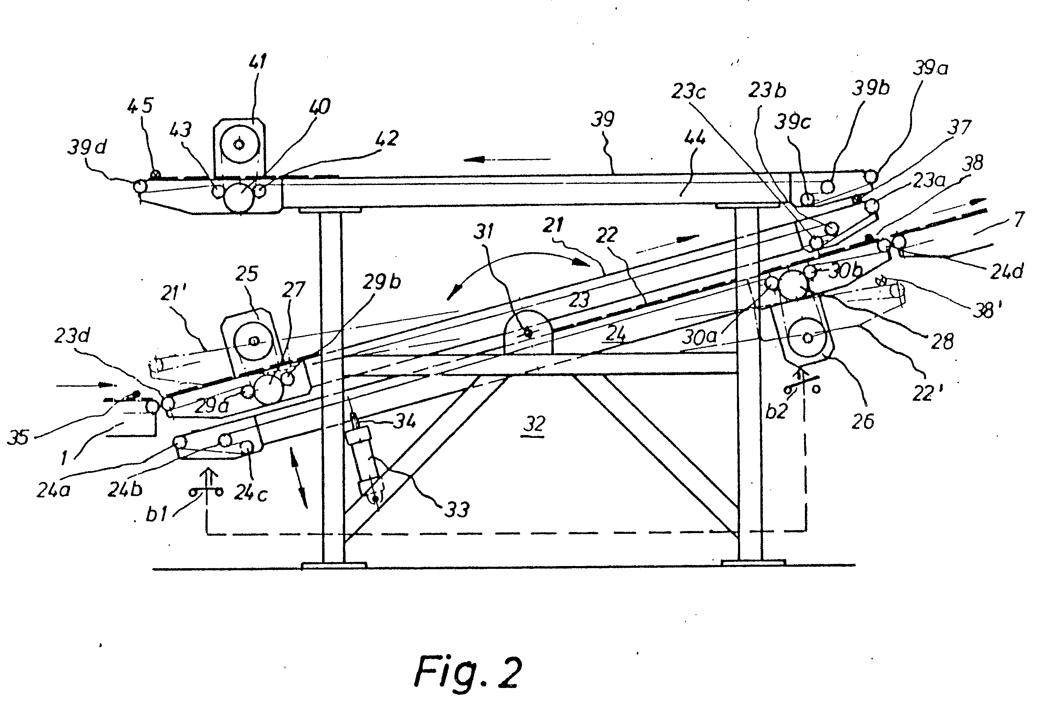

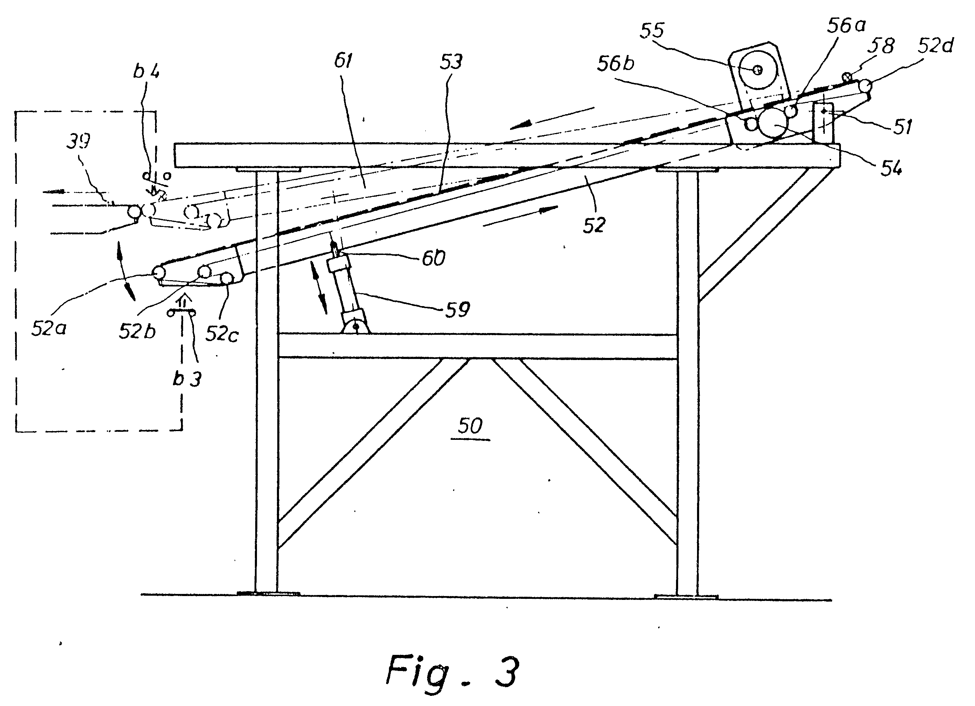

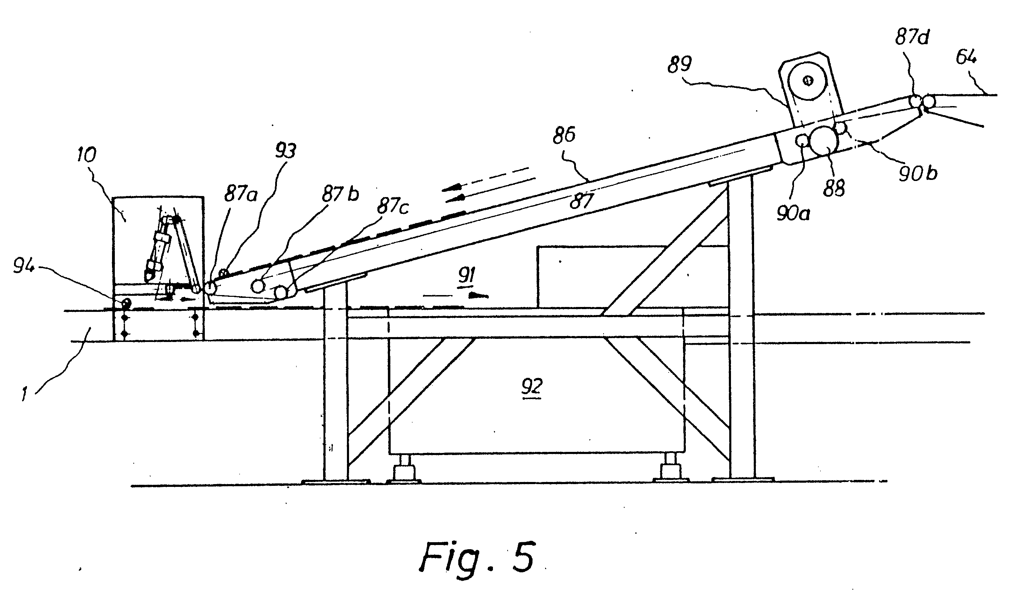

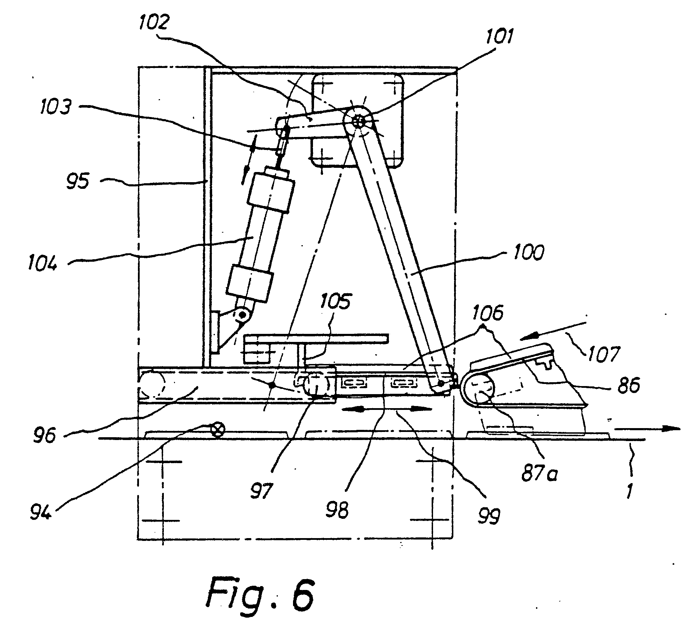

Après le dispositif d'éjection 4, dans le sens du déplacement des produits sur les bandes transporteuses 1 (de la gauche vers la droite sur la figure 1), se trouve un dispositif de récupération 5, qui sera décrit plus en détail en référence à la figure 2, surmonté d'une partie 6 du dispositif de stockage, lui-même décrit plus en détail en référence aux figures 2 et 3. Une autre partie 7 dudit dispositif de stockage, se localise immédiatement après le dispositif de récupération 5 et constitue la partie la plus en aval de la ligne. La partie 7 du dispositif de stockage permet d'ailleurs, comme cela sera décrit ci-dessous, d'inverser le sens du déplacement des produits pour les réinjecter dans la ligne d'emballage automatique en amont d'une quelconque station d'alimentation automatique. Le dispositif de stockage peut comporter un nombre plus ou moins grand de bandes transporteuses 8 disposées au-dessus des bandes transporteuses d'alimentation 1, dans le but d'accroître la capacité d'emmagasinage. Enfin le dispositif de recyclage 9 et son dispositif de décharge 10, permettent de réintroduire les produits momentanément stockés sur les bandes transporteuses d'alimentation 1. Ces deux dispositifs seront décrits plus en détails en référence aux figures 5 et 6.

En référence à la figure 2 le dispositif de récupération comporte essentiellement deux bandes transporteuses sans fin 21 et 22, parallèles entre elles et superposées. Ces bandes sont montées respectivement sur des supports 23 et 24 et maintenues sur ces supports par des roues ou cylindres de tension 23a, 23b, 23c, 23d, 24a, 24b, 24c et 24d. Chacune des bandes 21 et 22 comporte en outre son mécanisme d'entraînement indépendant comportant un moteur d'entraînement 25, respectivement 26, une roue d'entraînement 27, respectivement 28 et deux roues de tension 29a, 29b, respectivement 30a, 30b, tous ces éléments étant montés respectivement sur les supports 23 et 24. Les deux supports 23 et 24 sont solidaires l'un de l'autre et sont agencés de manière à pouvoir pivoter autour d'un axe 31 porté horizontalement par un cadre 32. Un vérin 33 est fixé à l'une des branches du cadre 32. L'extrémité de sa tige de piston 34 est reliée au support 24. Le vérin 33 hydraulique ou pneumatique commande le positionnement des supports 23 et 24 et par conséquent définit la position des bandes transporteuses 21 et 22 comme cela sera décrit par la suite. Sur la figure 2 la bande transporteuse 21 se trouve dans le prolongement d'une bande transporteuse d'alimentation définie par la référence 1 dans la description relative à la figure 1. La bande transporteuse 22 est prolongée par la partie du dispositif de stockage portant la référence 7 dans la description relative à la figure 1.

Comme cela a été dit précédemment les deux supports 23 et 24 portant respectivement les bandes transporteuses 21 et 22 sont pivotables autour de l'axe horizontal 31 et peuvent occuper deux positions distinctes. L'une de ces positions est tracée en traits pleins sur la figure 2, l'autre position est partiellement représentée en traits mixtes sur cette même figure sous les références 21' et 22'. Par ailleurs des détecteurs 37 et 38 permettent de constater si des produits se trouvent ou non sur les bandes transporteuses 21 ou 22 du dispositif de récupération en transmettant des signaux à une électronique de commande pour entraîner et positionner lesdites bandes en conséquence. La seconde position du détecteur 38 porte la référence 38'. Le détecteur 35 surplombe la bande 1. Deux contacteurs $b_1$ et $b_2$ servent à indiquer la position des bandes 21 et 22. Le même cadre 32 supporte également à son extrémité supérieure la partie 6 du dispositif de stockage. Cette partie se compose essentiellement d'une bande transporteuse sans fin 39 maintenue entre des roues ou cylindres de tension 39a, 39b, 39c et 39d et entraînée par une roue d'entraînement 40 reliée par un moyen connu à un moteur d'entraînement 41. Deux roues d'appui 42 et 43 permettent d'appliquer de façon permanente la bande transporteuse 39 sur la roue d'entraînement 40. La bande transporteuse 39 et le mécanisme d'entraînement sont montés sur un support 44 lui-même fixé au cadre 32. A l'extrémité de la bande transporteuse 39 se trouve fixé un détecteur 45 dont le rôle est identique à celui des détecteurs localisés aux extrémités des bandes porteuses 21 et 22 du dispositif de récupération.

La figure 3 représente plus en détails la partie du dispositif de stockage portant la référence 7 dans la description de la figure 1. Cette partie comporte un cadre 50 sur lequel est essentiellement monté, de façon pivotable autour d'un axe de pivotement horizontal 51, le support 52 d'une bande transporteuse sans fin 53. Cette bande est entraînée par une roue d'entraînement 54 actionnée par un moteur d'entraînement indépendant 55, par exemple au moyen d'une courroie ou d'une chaîne. La bande transporteuse 53 est soutenue par des roues ou cylindres de tension 52a, 52b, 52c et 52d, cette bande étant en outre plaquée contre la roue d'entraînement 54 au moyen de roues ou cylindres d'appui 56a et 56b. Un détecteur 58, par exemple une cellule photoélectrique est disposée à l'extrémité de la bande transporteuse 53. Sur le cadre 50 est monté un vérin hydraulique ou pneumatique 59 dont la tige 60 est solidaire du support 52. Le support 52 de la bande transporteuse 53 peut en réalité occuper deux positions dont l'une est tracée en traits pleins sur la figure 3 et dont l'autre, portant la référence 61 est tracée en traits mixtes sur cette même figure. Dans la position définie en premier, la bande transporteuse 53 se trouve dans le prolongement de l'une ou de l'autre des bandes transporteuses 21 ou 22 définie en référence à la figure 2. Dans sa position 61, la bande transporteuse 53 se trouve juxtaposée à la bande transporteuse 39 décrite en référence à cette même figure. Deux contacteurs b₃ et b₄ servent à indiquer la position du support 52 sur le cadre 50.

La figure 4 illustre une partie du dispositif de stockage ainsi que le dispositif d'éjection portant respectivement les références 8 et 4 dans la description relative à la figure 1. Un cadre 62 soutient à sa partie supérieure un support 63 qui porte une bande transporteuse sans fin 64 et son mécanisme d'entraînement. La bande 64 est maintenue par les roues ou cylindres de tension 63a, 63b, 63c et 63d. Elle est entraînée par une roue d'entraînement 65 connectée à un moteur d'entraînement indépendant 66, par exemple au moyen d'une chaîne ou d'une courroie. Pour assurer le contact permanent entre la bande transporteuse 64 et la roue d'entraînement 65, deux roues d'appui 67a et 67b se trouvent disposées de part et d'autre de la roue d'entraînement 65. Un détecteur 68 disposé à l'extrémité de la bande transporteuse 64 permet de déterminer la présence de produits tels que des plaques de chocolat 70 sur la bande transporteuse 64.

Il est bien entendu que plusieurs bandes transporteuses identiques à la bande 64 peuvent être disposées dans le prolongement l'une de l'autre dans le sens de la flèche 71 afin d'augmenter la capacité de stockage du dispositif de stockage. Les produits se déplacent sur la bande transporteuse 64 dans le sens contraire au déplacement de ces mêmes produits sur les bandes transporteuses d'alimentation portant la référence 1 sur la figure 1. La longueur totale du dispositif de stockage, égale à la somme des longueurs des différentes bandes transporteuses 64 juxtaposées, dépend de l'endroit où l'on souhaite réintroduire les produits stockés sur la ligne.

En dessous du support 62 se trouve une station d'alimentation automatique 72 représentée schématiquement. Il s'agit en fait de la dernière station d'alimentation automatique de la ligne, car elle est suivie par le dispositif d'éjection, dont le rôle est de rejeter les produits 73 dans un bac de récupération 74 lorsque le dispositif de stockage est entièrement saturé. Le dispositif d'éjection comporte une bande transporteuse sans fin 75 qui se trouve dans le prolongement des bandes transporteuses d'alimentation 1 à la sortie de la station d'alimentation automatique 72. La bande 75 est soutenue par les roues ou cylindres de tension 76a, 76b, 76c et 76d montés sur un support 76. Elle est entraînée par une roue d'entraînement 77 actionnées par un moteur indépendant 78. La bande 75 est plaquée contre la roue d'entraînement 77 au moyen des roues d'appui 79a et 79b. Les roues ou cylindres de tension 76a et 76b sont en réalité montés sur une pièce 80 coulissante horizontalement dans le sens de la flèche 81 sous l'action d'un vérin 82 dont la tige 83 est solidaire d'un levier 84. La pièce 80, portant les roues ou cylindres de tension 76a et 76b peuvent de ce fait occuper soit une première position représentée en traits pleins, soit une seconde position représentée en traits interrompus tout en maintenant la bande transporteuse 75 sous tension. Dans la première position la bande transporteuse 75 constitue un chemin continu entre d'une part la station d'alimentation automatique 72 et d'autre part le dispositif de récupération qui lui est juxtaposé en aval de la ligne. Dans la seconde position par contre l'extrémité aval de la bande transporteuse 75 est retirée en amont (à gauche sur la figure) et dégage une trappe 85 par laquelle les produits transportés tombent dans la corbeille de récupération 74.

La figure 5 illustre le dispositif de recyclage et son dispositif de décharge portant respectivement les références 9 et 10 dans la description relative à la figure 1, et dont le rôle est de réintroduire dans la ligne d'emballage automatique les produits momentanément stockés dans le dispositif de stockage. Le dispositif de recyclage comporte une bande transporteuse sans fin 86 portée par un support 87. Cette bande est soutenue par des roues ou cylindres de tension 87a, 87b, 87c et 87d montés sur le support 87. Elle est d'autre part entraînée par une roue d'entraînement 88, elle-même actionnée par un moteur ·d'entraînement 89. La bande transporteuse 86 est maintenue en contact avec la roue d'entraînement 88 au moyen de deux roues d'appui 90a et 90b. Le support 87 est monté en plan incliné sur un cadre 91 et agencé de façon à faire passer les produits de la bande transporteuse 64 sur une des bandes transporteuses d'alimentation 1 par l'intermédiaire du dispositif de décharge 10 en enjambant par exemple une station d'alimentation automatique 92. Deux détecteurs 93 et 94 sont montés aux extrémités des bandes transporteuses 86 et 1 pour déterminer d'une part si la bande 86 contient des produits provenant du dispositif de stockage et d'autre part si la bande 1 présente un « trou ».

La figure 6 est une vue agrandie du dispositif de décharge monté dans le prolongement de la bande transporteuse 86 du dispositif de recyclage. Ce dispositif se compose d'un support 95 en forme de potence solidaire d'un élément de guidage 96 comportant par exemple deux rails latéraux dans lesquels s'engagent deux roulettes 97 montées de part et d'autre d'un plateau 98 mobile horizontalement dans le sens de la flèche 99. L'extrémité antérieure du plateau 98 est supportée par un bras coudé 100 articulé sur un axe de rotation 101 et dont l'autre extrémité 102 est solidaire de la tige 103 du piston d'un vérin hydraulique ou pneumatique 104 fixé sur le support 95. Une butée 105 est montée à l'extrémité postérieure du .plateau 98.

Les tablettes de chocolat 106 provenant de la bande transporteuse 86 du dispositif de stockage et se déplaçant dans le sens de la flèche 107 arrivent sur le plateau 98 et sont arrêtées en fin de course par la butée 105. A ce moment un détecteur (non représenté) fournit un signal au dispositif de commande du vérin 104 qui agit sur le bras coudé 100 et provoque le déplacement du plateau 98 vers la gauche sur la figure 6, ce plateau étant d'une part maintenu par l'élément de guidage 96 au moyen des roulettes 97 engagées dans les rails latéraux et d'autre part supporté par l'extrémité inférieure du bras coudé 100. Les plaques de chocolat 106 sont retenues par la butée 105 pendant que la tablette 98 glisse sous elles jusqu'au moment où elles tombent sur la bande transporteuse d'alimentation 1 disposée en dessous pour être amenées vers une station d'alimentation automatique qui la dirige ensuite vers une machine à emballer. Bien entendu cette opération ne se fait qu'au moment où « un trou » aura été détecté sur la bande transporteuse d'alimentation 1, au moyen du détecteur 94.

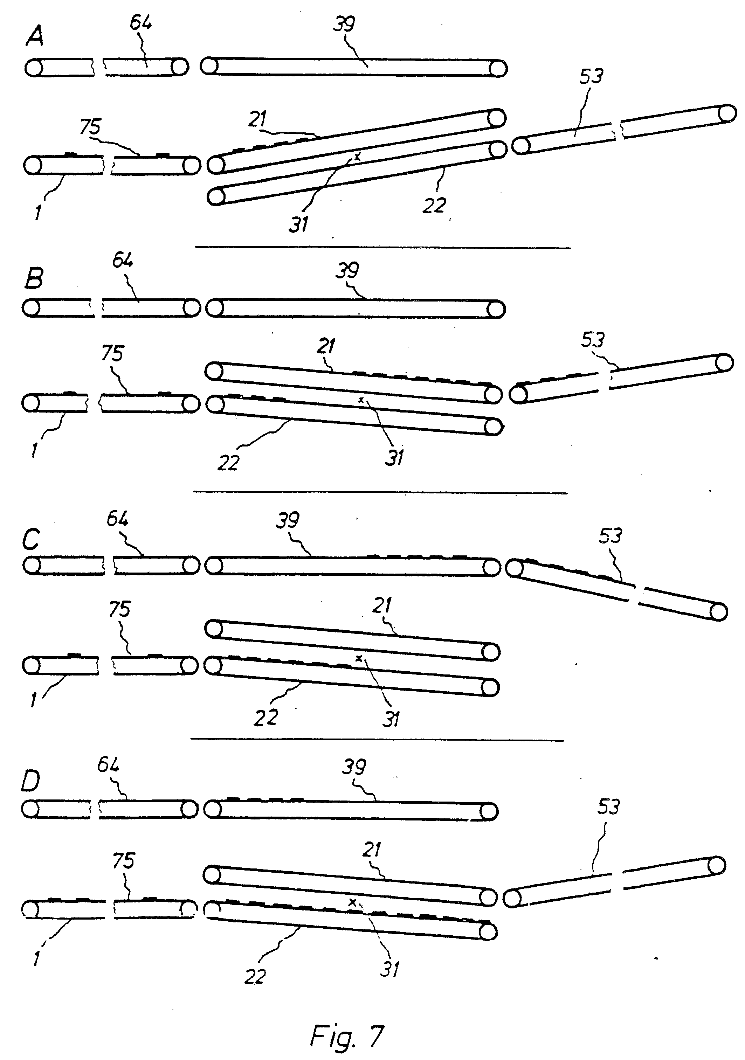

Le fonctionnement des différents éléments de la ligne d'emballage automatique et en particulier des dispositifs de récupération, de stockage et de recyclage, sera décrit en référence à la figure 7. Lorsque des produits transportés sur les bandes transporteuses d'alimentation 1 dépassent la dernière station d'alimentation automatique, c'est que pour une raison ou une autre ils n'ont pas pu être pris en charge par les machines d'emballage disposées le long de la ligne. Ils arrivent sur la bande transporteuse 75 du dispositif d'éjection qui les transmet au dispositif de récupération aussi longtemps que le dispositif de stockage n'est pas saturé. On se place dans ce premier cas.

Supposons par exemple que la bande transporteuse 21 du dispositif de récupération se trouve en regard de la bande transporteuse 75 du dispositif d'éjection comme le montre la figure 7A. La bande transporteuse 75 amène les produits qu'elle reçoit en continu à l'entrée de la bande 21. Cette dernière est entraînée de façon intermittente de telle façon que les produits soient disposés régulièrement sur la bande malgré le fait qu'ils soient amenés à son entrée de façon irrégulière. L'avance intermittente de la bande 21 se poursuit jusqu'au moment où elle est pleine. A ce moment la bande transporteuse 22 du dispositif de récupération est vide et la bande transporteuse 53 du dispositif de stockage est également vide et se trouve en position basse, c'est-à-dire en regard de ladite bande transporteuse 22. A ce moment les deux bandes parallèles 21 et 22 pivotent sur leur support autour de l'axe de rotation horizontal 31 de telle manière que la bande 22 soit amenée en regard de la bande transporteuse 75 et que la bande transporteuse 21 soit amenée en face de la bande transporteuse 53 du dispositif de stockage. La bande transporteuse 75 continue éventuellement à amener de façon irrégulière des produits non pris en charge par les stations d'alimentation automatique, produits qui se déposeront de façon régulière sur la bande transporteuse 22 entraînée de façon intermittente. Cette phase est illustrée par la figure 7B. Pendant ce temps la bande transporteuse 21 du dispositif de récupération est entraînée de façon continue de manière à se décharger rapidement sur la bande transporteuse 53 du dispositif de stockage. Cette dernière opération doit être effectuée très rapidement afin que la bande 21 soit à nouveau disponible pour une nouvelle série de produits lorsque la bande transporteuse parallèle 22 sera pleine.

La phase suivante est illustrée par la figure 7C. Lorsque les produits initialement déposés sur la bande 21 ont tous passés sur la bande transporteuse 53, qui pendant cette opération de transfert est entraînée de façon continue dans le même sens et à la même vitesse que la bande transporteuse 21, cette bande pivote dans sa position haute où elle se trouve en face de la bande transporteuse 39 du dispositif de stockage. Le sens de l'entraînement de·la bande 53 est alors inversé de façon à ce que les produits qui sont déposés sur elle soient transférés en continu sur la bande transporteuse 39. A la fin de cette opération la bande 53 est à nouveau vide et retourne dans sa position basse c'est-à-dire momentanément en regard de la bande transporteuse 21 du dispositif de récupération.

Cette position est illustrée par la figure 7D. Elle est maintenue jusqu'au moment où la bande transporteuse 22 du dispositif de récupération est à nouveau saturée. A ce moment les deux bandes transporteuses 21 et 22 pivotent sur leur support autour de l'axe de pivotement 31 ce qui nous ramène dans la configuration de la figure 7A où la bande transporteuse 22, cette fois-ci chargée de produits se trouve en regard de la bande transporteuse 53 du dispositif de stockage, la bande 21 vidée de son contenu étant amenée en face de la bande transporteuse 75 pour un nouveau cycle de chargement.

Le nombre des bandes transporteuses du dispositif de stockage peut être plus ou moins grand selon que l'on souhaite disposer d'une capacité de stockage plus ou moins grande. Les produits déposés en continu sur la bande transporteuse 39 sont amenés sur la bande 64 et les bandes identiques qui sont disposées à sa suite.

En ce qui concerne le fonctionnement du dispositif de recyclage on se référera à la figure 5. Les produits en provenance de bandes transporteuses 64 ou les suivantes du dispositif de stockage, sont transférés en continu sur la bande transporteuse 86 du dispositif de recyclage. Lorsque cette dernière est entièrement remplie, le mécanisme d'entraînement de la bande est commuté en mode intermittent et les produits sont transmis au dispositif de décharge dont le rôle est de déposer ces produits dans des « trous » sur les bandes transporteuses d'alimentation 1. Le dispositif de décharge est de préférence localisé entre deux stations d'alimentation automatique, les « trous » présents sur les bandes transporteuses d'alimentation 1 étant dus aux produits prélevés par les différentes stations d'alimentation se trouvant en amont. Lorsque tous les produits initialement déposés sur la bande transporteuse 86 ont été recyclés, cette bande sera à nouveau entraînée en continu et recevra une nouvelle série de produits momentanément stockés sur la bande transporteuse 64 du dispositif de stockage.

Il peut bien entendu arriver, comme cela a déjà été énoncé précédemment que l'ensemble du dispositif de stockage et les bandes transporteuses des dispositifs de recyclage et de récupération soient saturées. Dans ce cas il ne reste qu'une solution c'est d'éjecter les produits au moyen du dispositif d'éjection décrit plus en détails en référence à la figure 4.

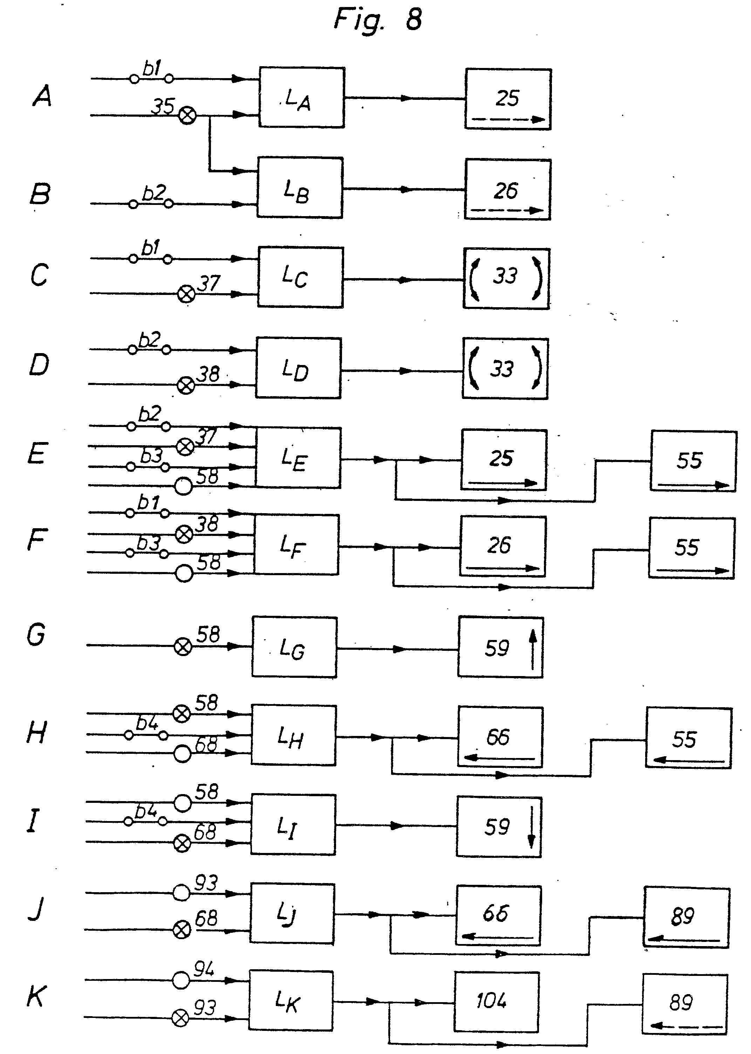

En référence à la figure 8A, $L_A$ représente une unité logique reliée par sa sortie au moteur d'entraînement 25 de la bande transporteuse 21 et dont l'entrée est connectée d'une part au contacteur $b_1$ et à la cellule photoélectrique 35. Lorsque cette cellule détecte des produits en fin de la bande 75 du dispositif d'éjection et lorsque simultanément le contacteur $b_1$ est fermé, l'unité logique $L_A$ donne au moteur 25 l'ordre d'avancer pas à pas pour charger les produits sur la bande 21.

La figure 8B illustre une unité logique $L_B$ dont la sortie est connectée au moteur d'entraînement 26 de la bande transporteuse 22 et dont l'entrée est reliée au contacteur $b_2$ et à la cellule photoélectrique 35. Lorsque cette cellule détecte des produits et lorsque simultanément le contacteur $b_2$ est fermé, l'unité logique $L_B$ enclenche le moteur 26 selon un mode intermittent pour charger les produits sur la bande transporteuse 22. Il est à noter que les deux interrupteurs $b_1$ et $b_2$ sont complémentaires, c'est-à-dire que l'un est forcément ouvert quand l'autre est fermé.

La figure 8C représente une unité logique $L_C$ connectée d'une part au vérin 33 ou plus spécifiquement au mécanisme de commande de ce vérin (non représenté) et d'autre part au contacteur $b_1$ et à la cellule photoélectrique 37. Le contacteur $b_1$ étant fermé, c'est-à-dire que la bande 21 se trouve en position de chargement et la cellule photoélectrique 37 étant obscurcie (c'est-à-dire qu'elle détecte des produits), ce qui signifie en réalité que la bande 21 est entièrement chargée, le vérin 33 bascule les supports 23 et 24 des bandes pour amener la bande 22 en position de chargement et la bande 21 en position de déchargement.

La figure 8D montre une unité logique $L_D$ connectée d'une part au vérin 33 et d'autre part au contacteur $b_2$ et à la cellule 38. Le contacteur $b_2$ étant fermé et la cellule 38 détectant des produits à l'extrémité de la bande 22, on se trouve dans la position symétrique de la position précédemment décrite. Le vérin bascule les bandes 21 et 22 de sorte que la bande 22 est amenée en position de déchargement et la bande 21 en position de chargement.

En référence à la figure 8E, une unité logique $L_E$ se trouve connectée par son entrée aux contacteurs $b_2$ et $b_3$ et aux cellules 37 et 58, tandis que sa sortie est reliée aux moteurs d'entraînement indépendants 25 et 55. La cellule photoélectrique 37 est obscurcie, ce qui revient à dire que la bande transporteuse 21 est pleine. La cellule photoélectrique 58 éclairée signifie que la bande 53 du dispositif de stockage est vide. Puisque le contacteur $b_2$ est fermé, la bande 21 est en position de déchargement et le fait que le contacteur $b_3$ soit fermé signifie que la bande 53 se trouve en position basse. Cette situation est illustrée par la figure 7B. Les moteurs 25 et 55 entraînent simultanément les bandes 21 et 53 en continu de la gauche vers la droite.

Le même fonctionnement s'observe dans le cas de la figure 8F où $L_F$ est une unité logique dont l'entrée est reliée aux cellules 38 et 58 ainsi qu'aux contacteurs $b_1$ et $b_3$ et dont la sortie est reliée aux moteurs d'entraînement 26 et 55. La cellule 38 est obscurcie ce qui revient à dire que la bande transporteuse 22 est pleine. La cellule 58 éclairée signifie que la bande 53 du dispositif de stockage est vide. Puisque le contacteur $b_1$ est fermé, la bande 22 est en position de décharge et le fait que le contacteur $b_3$ soit fermé signifie 53 se trouve en position basse. L'unité logique $L_F$ donne aux moteurs 26 et 55 l'ordre d'avancer en continu pour opérer le transfert des produits de la bande 22 sur la bande 53.

La figure 8G représente une unité logique $L_G$ dont l'entrée est connectée à la cellule photoélectrique 58 et la sortie au vérin 59 ou plus exactement à son dispositif de commande (non représenté). Lorsque la cellule photoélectrique 58 est obscurcie cela revient à dire que la bande transporteuse 53 est pleine. Le signal correspondant engendre une commande sur le vérin 59 qui fait basculer le support 52 de la bande transporteuse 53 vers le haut.

La figure 8H représente une unité logique $L_H$ dont l'entrée est connectée aux cellules photoélectriques 58 et 68 ainsi qu'au contacteur $b_4$ et dont la sortie est reliée aux moteurs 66 et 55. La cellule photoélectrique 58 est obscurcie, ce qui est interprété par l'unité logique $L_H$ comme une indication que la bande transporteuse 53 est pleine. La cellule 68 placée à l'extrémité de la bande transporteuse 64 est éclairée ce qui signifie que ladite bande est vide et par conséquent prête à recevoir les produits momentanément stockés sur la bande 53. En outre, le contacteur $b_4$ est fermé ; le signal correspondant signifie que le support 52 de la bande 53 est relevé, cette bande se trouvant ainsi dans l'alignement de la bande 64. Ces conditions étant remplies, l'unité logique $L_H$ donne aux moteurs 55 et 66 l'ordre d'avancer en continu de la droite vers la gauche pour effectuer le transfert des produits de la bande 53 sur la bande 64.

En référence à la figure 8I, une unité logique $L_I$ a son entrée reliée aux cellules 58 et 68 et au contacteur $b_4$ et sa sortie au vérin 59. La cellule photoélectrique 58 est éclairée, ce qui signifie que la bande 53 est vide. La cellule photoélectrique 68 est obscurcie, ce qui signifie que la bande 64 est pleine. Le contacteur $b_4$ est fermé ce qui signifie que le support 53 est en position haute. Pour remettre ce support en position basse et le rendre prêt pour un nouveau cycle, l'unité logique $L_I$ donne au vérin 59 l'ordre d'abaisser le support 52.

La figure 8J illustre une unité logique $L_J$ dont l'entrée est reliée aux cellules photoélectriques 93 et 68 et dont la sortie est connectée aux moteurs 66 et 89. La cellule 93 est éclairée ce qui signifie que la bande transporteuse 86 du dispositif de recyclage est vide. La cellule photoélectrique 68 est obscurcie ce qui signifie que la bande transporteuse 64 du dispositif de ·stockage est pleine. A ce moment l'unité logique $L_J$ donne l'ordre aux moteurs 66 et 89 d'effectuer un déplacement des bandes qu'ils entraînent en continu de la droite vers la gauche.

En référence à la figure 8K, une unité logique $L_K$ a son entrée connectée aux cellules 93 et 94 et sa sortie d'une part au vérin 104 du dispositif de décharge et d'autre part au moteur d'entraînement 89. La cellule photoélectrique 94 placée en amont du dispositif de décharge au-dessus des bandes transporteuses 1 est éclairée, ce qui signifie qu'il y a « un trou » sur la bande transporteuse 1. La cellule 93 obscurcie que des produits sont disponibles sur la bande 86 du dispositif de recyclage et attendent d'être déchargés sur la bande transporteuse 1. L'unité logique $L_K$ donne au vérin 104 l'ordre d'actionner le dispositif de décharge et au moteur d'entraînement 89 de la bande transporteuse 86 d'effectuer un déplacement intermittent de la droite vers la gauche.

Il est bien évident que les dispositifs décrits ci-dessus ne représentent qu'une forme de réalisation qui peut être sujette à de nombreuses variantes. Par exemple, le support 52 de la bande transporteuse 53, au lieu d'être basculé en position haute et en position basse pourrait être monté sur un pivot vertical et tourné de 180° pour effectuer le transfert des produits de la bande 53 sur la bande 39. Dans ce cas il ne serait plus nécessaire d'inverser le sens de rotation du dispositif d'entraînement de la bande transporteuse 53. Par ailleurs les cellules photoélectriques pourraient être remplacées par des détecteurs d'un type différent, de simples contacteurs ou des compteurs électroniques qui comptent le nombre de produits qui s'engagent sur la bande transporteuse et fournissent un signal aux différentes unités logiques lorsqu'un nombre prédéterminé est atteint.

Quelles que soient les solutions adoptées, le but de l'invention est de réaliser par des moyens relativement simples, une ligne d'emballage entièrement automatique.

## Revendications

1. Ligne d'emballage automatique comportant des bandes transporteuses d'alimentation (1) agencées pour amener des produits (2) à emballer, disposés en rangées et ne se touchant pas les uns les autres, vers une série de machines à emballer, et des stations d'alimentation automatique (3) disposées le long desdites bandes pour distribuer sélectivement lesdits produits aux machines à emballer, cette ligne étant équipée d'un dispositif de récupération (5) monté après la dernière station d'alimentation automatique pour recueillir les produits n'ayant pas été pris en charge par lesdites stations, d'un dispositif de stockage (6, 7, 8) pour emmagasiner momentanément les produits recueillis par le dispositif de récupération, d'un dispositif d'éjection (4) qui évacue les produits disposés de façon non conforme pour être réinjectés sur la ligne et/ou en cas de saturation du dispositif de stockage, et d'un dispositif de recyclage automatique (9) des produits emmagasinés par le dispositif de stockage, le dispositif de récupération (5), le dispositif de stockage (6, 7, 8) et le dispositif de recyclage (9) comportant des bandes transporteuses sans fin disposées au moins momentanément à la suite les unes des autres, des mécanismes d'entraînement indépendants et des détecteurs agencés pour commander la mise en marche et l'arrêt desdits mécanismes, dans lequel le dispositif de recyclage (9) est agencé pour réinjecter les produits recueillis par le dispositif de récupération (5) puis emmagasinés par le dispositif de stockage (6, 7, 8) sur les bandes transporteuses d'alimentation, après au moins la première station d'alimentation automatique et avant au moins la dernière station d'alimentation automatique de la ligne, caractérisée èn ce que le dispositif de récupération (5) comporte deux bandes transporteuses parallèles (21, 22) et superposées, montées sur un support (23, 24), cet ensemble étant pivotable autour d'un axe (31) disposé à l'intersection des diagonales du quadrilatère défini par les quatre extrémités desdites bandes, chacune de ces bandes étant équipée d'un mécanisme agencé de manière à l'animer alternativement d'un mouvement continu et d'un mouvement intermittent.

2. Ligne d'emballage selon la revendication 1, caractérisée en ce que le dispositif de stockage (6, 7, 8) comporte au moins deux bandes transporteuses (6,7) sans fin, dont la première (7) est agencée de manière à ce qu'elle soit pivotable entre une première position dans laquelle elle forme une chaîne ininterrompue alternativement avec l'une et l'autre bandes parallèles (21, 22) du dispositif de récupération (5), et une seconde position dans laquelle elle forme une chaîne ininterrompue avec la seconde bande (6) dudit dispositif de stockage.

3. Ligne d'emballage selon la revendication 2, caractérisée en ce que la seconde bande (6) du dispositif de stockage est disposée au moins partiellement au-dessus des bandes transporteuses d'alimentation (1) et/ou de la bande supérieure (21) du dispositif de récupération.

4. Ligne d'emballage selon la revendication 1, caractérisée en ce que le dispositif de recyclage (9) comporte une bande transporteuse (86) sans fin et un mécanisme de décharge (10) pour redéposer les produits à recycler sur une des bandes transporteuses d'alimentation (1), entre au moins la première et la dernière stations d'alimentation automatique de la ligne.

5. Ligne d'emballage selon la revendication 1, caractérisée en ce que les mécanismes d'entraînement des bandes du dispositif de récupération (5) sont agencés de manière à mouvoir l'une des bandes de façon intermittente, lorsqu'elle recueille les produits non acceptés par les stations d'alimentation automatique, et simultanément l'autre bande de façon continue à grande vitesse, lorsqu'elle transmet les produits recueillis au dispositif de stockage.

6. Ligne d'emballage selon les revendications 1 et 2, caractérisée en ce que le mécanisme d'entraînement de la première bande (7) du dispositif de stockage est agencé de manière à animer cette bande d'un mouvement continu dans le sens du déplacement des bandes transporteuses d'alimentation (1), lorsqu'elle occupe ladite première position, et d'un mouvement continu dans le sens contraire au déplacement des bandes transporteuses d'alimentation (1), lorsqu'elle occupe ladite seconde position.

7. Ligne d'emballage selon les revendications 1 et 2, caractérisée en ce que le mécanisme d'entraînement de la seconde bande (6) du dispositif de stockage est agencé de manière à animer cette bande d'un mouvement continu dans le sens contraire au sens du déplacement des bandes transporteuses d'alimentation (1), pendant qu'elle reçoit les produits emmagasinés sur la première bande et pendant qu'elle transmet ces produits au dispositif de recyclage.

8. Ligne d'emballage selon la revendication 2, caractérisée en ce que le dispositif de stockage (6, 7, 8) comporte plusieurs bandes transporteuses (8) disposées à la suite les unes des autres pour augmenter sa capacité de stockage.

9. Ligne d'emballage selon les revendications 1 et 4, caractérisée en ce que le mécanisme d'entraînement de la bande transporteuse (86) du dispositif de recyclage (9) est agencé de manière à animer celle-ci d'un mouvement intermittent, dans le sens contraire au sens du déplacement des bandes transporteuses d'alimentation (1).

10. Ligne d'emballage selon la revendication 4, caractérisée en ce que le mécanisme de décharge (10) comporte un plateau mobile (98) agencé de manière à redéposer une à une, sur l'une des bandes transporteuses d'alimentation, des rangées de produits disposés en lignes transversales par rapport à la direction longitudinale de la ligne d'emballage, ce mécanisme de décharge étant positionné entre la première et la dernière station automatique d'alimentation.

## Claims

1. Automatic packing line comprising belts conveying food (1) adapted to carry products (2) for packing, arranged in rows not touching each other, towards a series of packing machines, and automatic food stations (3) placed along the said belts for distributing selectively the said products to the packing machines, this belt being equipped with a recuperation device (5) mounted after the last automatic food station to collect those products not having been claimed by the said stations, with a storing device (6, 7, 8) for temporarily stocking the products collected by the recuperation device, with an ejection device (4) which clears those products not placed properly to be reintroduced on the belt and/or in case the storing device should be saturated, and with an automatic recycling device (9) of the products stocked by the storing device, the recuperation device (5), the storing device (6, 7, 8) and the recycling device (9) comprising endless conveyor belts placed at least momentarily one after the other, independent driving mechanisms and detectors adapted to control the starting up and stopping of the said mechanisms, in which the recycling device (9) is adapted to reintroduce the products collected by the recuperation device (5) then stocked by the storing device (6, 7, 8) on the food conveyor belts, after at least the first automatic food station and before at least the last automatic food station of the belt, characterized in that the recuperation device (5) comprises two parallel and superposed conveyor belts (21, 22) mounted on a support (23, 24), this assembly being pivotable round an axis (31) placed at the intersection of the diagonal lignes of the quadrilateral defined by the four ends of the said belts, each one of these belts being equipped with a mechanism adapted in order to actuate it alternatively with a continuous movement and an intermittent movement.

2. Packing line according to claim 1, characterized in that the storing device (6, 7, 8) comprises at least two endless conveyor belts (6, 7), the first (7) of which is adapted in such a way as to be pivotable between a first position in which it forms an uninterrupted chain alternatively with one and the other parallel belts (21, 22) of the recuperation device (5), and a second position in which it forms an uninterrupted chain with the second belt (6) of the said storing device.

3. Packing line according to claim 2, characterized in that the second belt (6) of the storing device is placed at least partially above the food conveyor belts (1) and/or the upper belt (21) of the recuperation device.

4. Packing line according to claim 1, characterized in that the recycling device (9) comprises an endless conveyor belt (86) and an unloading mechanism (10) for placing again the products to be recycled on one of the food conveyor belts (1), between at least the first and the last automatic food stations of the line.

5. Packing line according to claim 1, characterized in that the driving mechanisms of the belts of the recuperation device (5) are adapted so as to actuate one of belts in an intermittent way when it collects those products not accepted by the automatic food stations, and simultaneously the other belt in a continuous way at high speed, when it transfers the products collected to the storing device.

6. Packing line according to claims 1 and 2, characterized in that the driving mechanism of the first belt (7) of the storing device is adapted in such a way as to activate this belt with a continuous movement in the moving direction of the food conveyor belts (1), when it occupies said first position and with a continuous movement in the opposite moving direction of the food conveyor belts (1) when it occupies said second position.

7. Packing line according to claims 1 and 2, characterized in that the driving mechanism of the second belt (6) of the storing device is adapted in such a way as to actuate this belt with a continuous movement in the ooposite moving direction of the food conveyor belts (1) while it receives the products stored on the first belt and while it transfers these products to the recycling device.

8. Packing line according to claim 2, characterized in that the storing device (6, 7, 8) comprises several conveyor belts (8) placed one after the other in order to increase its stocking capacity.

9. Packing line according to claims 1 and 4, characterized in that the driving mechanism of the conveyor belt (86) of the recycling device (9) is adapted in such a way as to actuate this belt with an intermittent movement, in the opposite moving direction of the food conveyor belts (1).

10. Packing line according to claim 4, characterized in that the unloading mechanism (10) comprises a mobile platform (98) adapted in such a way as to place again one by one, on one of the food conveyor belts, rows of products placed in transversal lines with respect to the longitudinal direction of the packing line, this unloading mechanism being positioned between the first and the last automatic food stations.

## Ansprüche

1. Automatische Verpackungsstraße mit die reihenweise ohne gegenseitige Berührung angeordneten, zu verpackenden Produkte einer Reihe von Einwickelmaschinen zuführenden Zufuhrförderbändern (1) und mit längs dieser Förderbänder angeordneten, automatischen Zufuhrstationen (3), durch die die Produkte wahlweise auf die Einwickelmaschinen verteilt werden, wobei diese Verpackungsstraße ausgerüstet ist mit einer hinter der letzten automatischen Zufuhrstation angeordneten Sammelvorrichtung (5), um die von den erwähnten Stationen nicht verarbeiteten Produkte zu sammeln, mit einer Speichervorrichtung (6, 7, 8), um die von der Sammelvorrichtung gesammelten Produkte vorübergehend zu speichern, mit einer Auswurfvorrichtung (4), die die Produkte, die für die Rückführung in die Verpackungsstraße ungeeignet angeordnet sind, und/oder im Fall der Sättigung der Speichervorrichtung abführt und mit einer automatischen Rückführvorrichtung (9) für die in der Speichervorrichtung gespeicherten Produkte, wobei die Sammelvorrichtung (5), die Speichervorrichtung (6, 7, 8) und die Rückführvorrichtung (9) wenigstens vorübergehend hintereinander angeordnete endlose Transportbänder, unabhängige Antriebsmechanisem und das Ingangsetzen und Anhalten dieser Mechanismen steuernde Fühler aufweisen, wobei weiterhin durch die Rückführvorrichtung (9) die von der Sammelvorrichtung (5) aufgenommenen und sodann durch die Speichervorrichtung (6, 7, 8) gespeicherten Produkte auf die Zufuhrförderbänder nach zumindest der ersten und vor zumindest der letzten automatischen Zufuhrstation der Verpackungsstraße zurückführbar sind, dadurch gekennzeichnet, daß die Sammelvorrichtung (5) zwei parallele und übereinander angeordnete sowie auf einem Träger (23, 24) gelagerte Förderbänder (21, 22) aufweist, daß das so gebildete Ganze um ein durch den Schnittpunkt der Diagonalen des durch die vier Enden der Förderbänder gebildeten Rechteckes verlaufende Achse (31) schwenkbar ist und daß jedes der Förderbänder mit einem Mechanismus ausgerüstet ist, durch den ihm abwechslungsweise eine kontinuierliche und eine intermittierende Bewegung erteilbar ist.

2. Verpackungsstraße nach Anspruch 1, dadurch gekennzeichnet, daß die Speichervorrichtung (6, 7, 8) wenigstens zwei endlose Förderbänder (6, 7) aufweist, von denen das erste (7) zwischen einer ersten Stellung, in der es abwechselnd mit dem einen und dem anderen der parallelen Förderbänder (21, 22) der Sammelvorrichtung (5) eine ununterbrochene Förderbahn bildet, und einer zweiten Stellung verschwenkbar ist, in der es eine solche ununterbrochene Förderbahn mit dem zweiten Förderband (6) der Speichervorrichtung bildet.

3. Verpackungsstraße nach Anspruch 2, dadurch gekennzeichnet, daß das zweite Förderband (6) der Speichervorrichtung wenigstens teilweise oberhalb der Zufuhrförderbänder (1) und/oder des oberen Förderbandes (21) der Sammelvorrichtung angeordnet ist.

4. Verpackungsstraße nach Anspruch 1, dadurch gekennzeichnet, daß die Rückführvorrichtung (9) ein endloses Förderband (86) und einen die rückführenden Produkte auf eines der zufuhrförderbänder (1) zwischen wenigstens der ersten und der letzten automatischen Zufuhrstation der Verpackungsstraße ablegenden Ablagemechanismus (10) aufweist.

5. Verpackungsstraße nach Anspruch 1, dadurch gekennzeichnet, daß die Antriebsmechanismen der Förderbänder der Sammelvorrichtung (5) dazu eingerichtet sind, eines der Förderbänder, während es die von den automatischen Zufuhrstationen nicht angenommenen Produkte aufnimmt, intermittierend und gleichzeitig das andere Förderband, während es die aufgenommenen Produkte der Speichervorrichtung zuführt, mit großer Geschwindigkeit kontinuierlich anzutreiben.

6. Verpackungsstraße nach den Ansprüchen 1 und 2, dadurch gekennzeichnet, daß der Antriebsmechanismus des ersten Förderbandes (7) der Speichervorrichtung dazu eingerichtet ist, dieses, während es in der ersten Stellung steht, kontinuierlich im Sinne der Förderrichtung der Zufuhrförderbänder (1) und, während es in der zweiten Stellung steht, kontinuierlich in dem der Förderrichtung der Zufuhrförderbänder (1) entgegengesetzten Richtung anzutreiben.

7. Verpackungsstraße nach den Ansprüchen 1 und 2, dadurch gekennzeichnet, daß der Antriebsmechanismus des zweiten Förderbandes (6) der Speichervorrichtung dazu eingerichtet ist, dieses Förderband während der Aufnahme der auf dem ersten Förderband gespeicherten Produkte und während der Überführung dieser Produkte zu der Rückführungsvorrichtung kontinuierlich in dem der Förderrichtung der Zufuhrförderbänder (1) entgegengesetzten Sinne anzutreiben.

8. Verpackungsstraße nach Anspruch 2, dadurch gekennzeichnet, daß die Speichervorrichtung (6, 7, 8) mehrere die Speicherkapazität erhöhende hintereinander angeordnete Förderbänder (8) aufweist.

9. Verpackungsstraße nach den Ansprüchen 1 und 4, dadurch gekennzeichnet, daß der Antriebsmechanismus des Förderbandes (86) der Rückführungsvorrichtung (9) dazu eingerichtet ist, dieses intermittierend in einem der Förderrichtung der Zufuhrförderbänder (1) entgegengesetzten Sinne anzutreiben.

10. Verpackungsstraße nach Anspruch 4, dadurch gekennzeichnet, daß der Ablagemechanismus (10) eine bewegliche Platte (98) aufweist, durch die in Querreihen bezüglich der Längsrichtung der Verpackungsstraße angeordnete Produktreihen einzeln aufeinanderfolgend auf einem der Zufuhrförderbänder ablegbar sind und daß der Ablagemechanismus zwischen der ersten und der letzten automatischen Zufuhrstation angeordnet ist.

Fig. 1

10 9 8 6 7 2 3 1 3 4 5

0 005 740

Fig. 2

0 005 740

Fig. 3

0 005 740

Fig.4

0 005 740

Fig. 5

0 005 740

0 005 740

Fig. 6

6

A

64

39

53

75

21

31

22

1

B

64

39

53

75

21

22

31

1

C

64

39

53

21

75

22

31

1

D

64

39

53

21

75

31

22

1

Fig. 7

Fig. 8

0 005 740